# DEMANDE DE BREVET EUROPEEN

(11) **EP 1 035 341 A1**
(43) Date de publication de la demande: **13.09.2000**
(21) Numéro de dépôt: 00400430.5
(22) Date de dépôt: 16.02.2000
(51) Int. Cl.: F16C 33/78, F16C 33/72

(54) **Procédé de fixation du joint d'étanchéité sur une bague de palier à contact de roulement**

(30) Priorité: 08.03.1999 FR 9902828
(71) Demandeur: SKF FRANCE, F-92140 Clamart (FR)
(72) Inventeur: Tadic, Vedran, 37000 Tours (FR); Brandenstein, Manfred, Eussenheim (DE); Van de Sanden, Johannes Franciscus, 3435 DT Nieuwegein (NL)
(74) Mandataire: Casalonga, Axel

(57) **Abrégé**

Un dispositif de palier à roulement comprend une bague extérieure 105 pourvue d'un chemin de roulement intérieur 106 formé sur son alésage, une bague intérieure 101 pourvue d'un chemin de roulement extérieur 102 formé sur sa surface extérieure cylindrique, au moins une rangée d'éléments roulants 111 disposés entre les deux chemins de roulement 102, 106 et au moins un organe d'étanchéité 121 solidaire de l'une des bagues. L'organe d'étanchéité 121 comprend une armature métallique annulaire 123. Le dispositif comprend une partie de liaison 126 entre l'armature 123 et la bague qui la supporte, la partie de liaison 126 étant formée par un métal d'apport assurant après fusion et refroidissement la solidarisation, l'étanchéité et la concordance de formes entre la dite armature et la dite bague

## Description

La présente invention concerne le domaine des paliers à roulement, par exemple à billes, à rouleaux, à aiguilles, etc., munis d'au moins un organe d'étanchéité monté sur l'une des bagues du roulement, de préférence la bague extérieure.

Le roulement est lubrifié au moyen d'une graisse disposée à l'intérieur dudit roulement avant la mise en place des joints. Les organes d'étanchéité sont destinés, d'une part, à retenir le lubrifiant dans le roulement et, d'autre part, à éviter l'entrée d'éléments polluants dans le roulement. La bague extérieure du roulement est munie de deux rainures annulaires latérales dans chacune desquelles est monté un organe d'étanchéité. L'organe d'étanchéité peut se présenter sous la forme d'un joint ou d'un flasque. Le joint se compose d'une armature métallique annulaire en forme de disque destinée à lui conférer une rigidité suffisante. Sur cette armature est surmoulé un matériau élastique (caoutchouc, nitrile, etc.), qui assure :
- l'étanchéité statique avec la bague sur laquelle le joint est fixé sous la forme d'un bourrelet annulaire faisant radialement saillie par rapport à la périphérie de l'armature,
- l'étanchéité dynamique avec l'autre bague du roulement sous la forme d'une lèvre annulaire frottante sur ladite autre bague.

Un tel joint est rentré à force dans la rainure, le matériau élastique étant ainsi précontraint à l'intérieur de la rainure et réalisant à la fois le centrage et le maintien du joint dans la rainure, ainsi que l'étanchéité statique.

Le flasque est une simple rondelle métallique fixée par un moyen approprié sur la bague extérieure du roulement. On peut par exemple sertir la périphérie du flasque dans une rainure annulaire de la bague extérieure du roulement.

L'étanchéité statique est réalisée au niveau de la zone de sertissage du flasque sur la bague extérieure.

L'étanchéité dynamique est réalisée dans ce cas sans frottement par passage étroit aménagé entre le flasque et l'autre bague du roulement.

Dans ce cas, l'armature métallique et le flasque ne sont qu'une seule et même pièce.

Si de telles étanchéités donnent toute satisfaction dans la majorité des cas, il est des applications dans lesquelles la bague intérieure est fixe et la bague extérieure tourne à grande vitesse. La graisse se trouve alors centrifugée vers l'extérieur et la pression qui en résulte a tendance à la faire suinter à travers l'étanchéité statique par cheminement progressif de la graisse entre la rainure de la bague extérieure et la périphérie du joint ou du flasque. Ce phénomène est aggravé lorsque le roulement fonctionne à haute température. La graisse devient alors plus fluide, ce qui favorise encore les fuites par l'étanchéité statique.

De plus, dans le cas de l'utilisation d'un joint, le vieillissement progressif du matériau élastique provoque son durcissement. Ce phénomène constitue une cause supplémentaire de fuite de lubrifiant au niveau de l'étanchéité statique. La conséquence de ces fuites est la diminution progressive de la quantité de graisse présente à l'intérieur du roulement, c'est-à-dire radialement entre les bagues et axialement entre les joints d'étanchéité et la défaillance prématurée du roulement par défaut de lubrification.

Ce type de problème se rencontre par exemple dans les roulements utilisés dans les galets tendeurs de courroies de moteurs thermiques de véhicules automobiles.

La bague extérieure du roulement tourne à grande vitesse en raison du faible diamètre du galet et l'ensemble fonctionne dans une atmosphère chaude et confinée.

L'invention a pour objet de résoudre ce problème.

L'invention a pour objet de proposer un palier à roulement à durée de vie allongée et à lubrification améliorée.

Le dispositif de palier à roulement, selon l'invention, est du type comprenant une bague extérieure pourvue d'un chemin de roulement intérieur formé sur son alésage et d'au moins une rainure également formée sur son alésage et adjacente à une face radiale, une bague intérieure pourvue d'un chemin de roulement extérieur formé sur sa surface extérieure cylindrique, au moins une rangée d'éléments roulants disposés entre les deux chemins de roulement, et au moins un organe d'étanchéité solidaire de l'une des bagues. L'organe d'étanchéité comprend une armature métallique annulaire. Le dispositif comprend une partie de liaison entre l'armature et la bague qui la supporte, la partie de liaison étant formée par un métal d'apport assurant après fusion et refroidissement la solidarisation et l'étanchéité par concordance de formes avec la dite armature et la dite bague. La partie de liaison est disposée dans ladite rainure.

Ainsi, l'armature est solidarisée avec la bague par concordance et interférence de forme et pas seulement par adhérence de la soudure. En d'autres termes, la partie de liaison assure un effet de cale ou de coin entre l'armature et la bague. Ladite rainure est de type standard sur les roulements destinés à recevoir des joints ce qui n'entraîne aucun surcoût.

Avantageusement, l'armature est en contact avec la dite rainure.

Le métal d'apport peut être à base d'étain, d'argent ou d'un alliage d'argent et d'étain.

Avantageusement, la partie de liaison est formée dans une rainure annulaire de la dite bague.

L'organe d'étanchéité peut comprendre uniquement un flasque métallique comportant un passage étroit avec l'autre bague, ou une lèvre souple annulaire apte à venir en contact de frottement sur l'autre bague.

La présente invention a également pour objet un procédé de fixation d'un organe d'étanchéité sur une bague de palier à roulement, du type comprenant une bague extérieure pourvue d'un chemin de roulement intérieur formé sur son alésage et d'au moins une rainure également formée sur son alésage et adjacente à une face radiale, une bague intérieure pourvue d'un chemin de roulement extérieur formé sur sa surface extérieure cylindrique, au moins une rangée d'éléments roulants disposés entre les deux chemins de roulement, et au moins un organe d'étanchéité solidaire de l'une des bagues. L'organe d'étanchéité comprend une armature métallique rigide et une lèvre souple apte à venir en contact de frottement sur l'autre bague. Le dit procédé comprend la formation d'une partie de liaison par fusion et refroidissement d'un métal d'apport disposé entre l'armature et la bague qui la supporte.

Dans un mode de réalisation de l'invention, on dispose le métal d'apport sur un bord de l'armature, on met en place l'organe d'étanchéité sur la dite bague, on chauffe le métal d'apport jusqu'à obtenir sa fusion, le métal d'apport se répartissant entre l'armature et la dite bague puis se refroidissant. On peut disposer le métal d'apport sous la forme d'un revêtement sur la périphérie de l'armature.

Dans un autre mode de réalisation de l'invention, le métal d'apport se présentant sous la forme d'un cordon, on coupe une longueur appropriée de cordon, on dispose le cordon puis l'organe d'étanchéité sur la dite bague, on chauffe le métal d'apport jusqu'à obtenir sa fusion, le métal d'apport se répartissant entre l'armature et la dite bague puis se refroidissant. Le métal d'apport peut aussi se présenter sous la forme d'un anneau continu.

Le moyen de chauffage du métal d'apport peut être un faisceau laser ou un faisceau d'électrons.

On dispose ainsi d'un procédé de fixation de joints d'étanchéité économique et adapté à la production en grande série tout en permettant une réduction de la quantité de matériau élastique utilisée dans la mesure où celui-ci ne recouvre plus la totalité de l'armature mais forme seulement la lèvre d'étanchéité et une partie de surface suffisante pour être convenablement fixée, par exemple par surmoulage, sur l'armature.

Le procédé permet d'obtenir une étanchéité statique extrêmement efficace et ne vieillissant pas dans le temps entre l'armature de l'organe d'étanchéité et la bague qui le supporte.

La présente invention sera mieux comprise et d'autres avantages apparaîtront à la lecture de la description détaillée de quelques modes de réalisation pris à titre d'exemples nullement limitatifs et illustrés par les dessins annexés, sur lesquels :
la figure 1 est une vue en coupe axiale d'un palier à roulement selon l'art antérieur;
la figure 2 est une vue partielle agrandie de la figure 1;
la figure 3 est une demi-vue en coupe axiale d'un palier à roulement selon un premier mode de réalisation de l'invention, avant fixation définitive du joint d'étanchéité;
la figure 4 est une vue correspondant à la figure 3 après fixation définitive du joint d'étanchéité; et
la figure 5 est une demi-vue en coupe axiale d'un palier à roulement selon un autre mode de réalisation de l'invention.

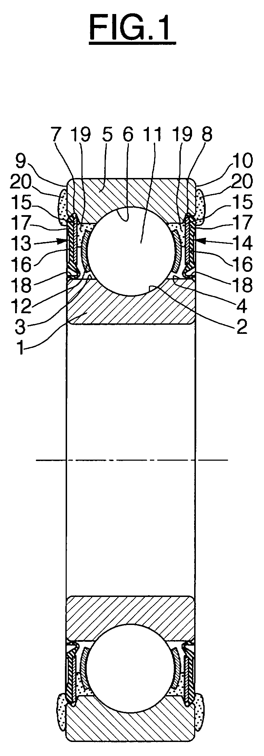

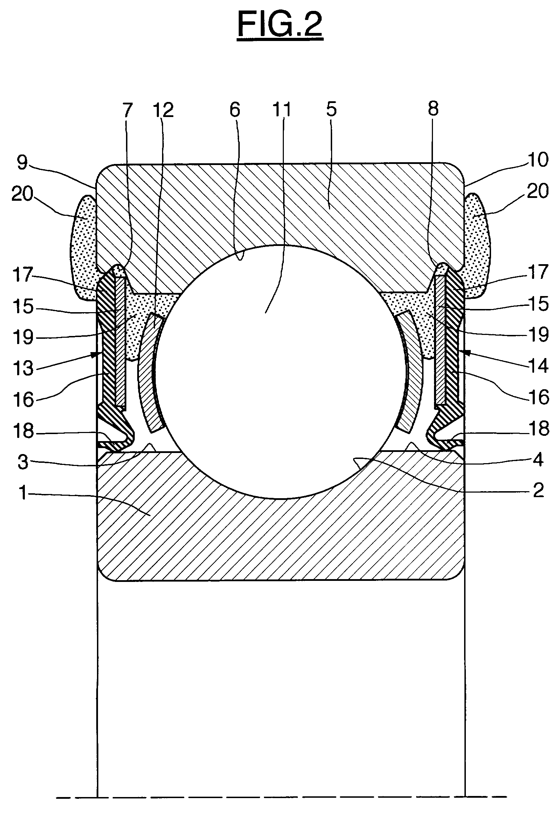

Comme on peut le voir sur les figures 1 et 2, un palier à roulement conventionnel comprend une bague intérieure fixe 1 pourvue d'un chemin de roulement extérieur 2 et de deux surfaces cylindriques extérieures 3 et 4 axialement disposées d'un côté et de l'autre du chemin de roulement 2, une bague extérieure 5 tournante pourvue d'un chemin de roulement intérieur 6 et de deux rainures 7 et 8 formées radialement vers l'extérieur et adjacentes aux faces radiales 9 et 10 de la bague extérieure 5 qui forment ses extrémités axiales, et une rangée d'éléments roulants 11, ici des billes, disposés entre les chemins de roulement 2 et 6. L'écartement circonférentiel régulier des éléments roulants 11 est assuré par une cage en tôle 12. Deux organes d'étanchéité 13 et 14 sont fixés à la bague extérieure 5. Les organes d'étanchéité 13 et 14 étant identiques et montés symétriquement par rapport à un plan radial passant par le centre des éléments roulants 11, seul l'organe d'étanchéité 13 sera décrit.

L'organe d'étanchéité 13 comprend une armature métallique radiale 15 en forme de disque, s'étendant à partir de la rainure 7 vers la surface extérieure 3 de la bague intérieure 1. Sur la face de l'armature 15 opposée aux éléments roulants 11, est surmoulée une partie 16 en élastomère dont l'extrémité radiale extérieure 17 forme un bourrelet qui s'étend radialement dans la rainure 7. Ce bourrelet 17 est entré à force lors du montage et vient se positionner dans la rainure 7. L'extrémité radiale intérieure de la partie en élastomère 15 forme une lèvre 18 qui vient en contact de frottement sur la surface extérieure 3 de la bague intérieure 1.

Préalablement au montage des organes d'étanchéité 13 et 14, on aura disposé à l'intérieur du roulement, entre les bagues 1 et 5, une certaine quantité de graisse 19 destinée à assurer la lubrification du roulement. En fonctionnement, l'armature 15 assure une certaine rigidité à l'organe d'étanchéité 13 et l'empêche de se déformer.

Toutefois, la rotation, notamment à haute vitesse, de la bague extérieure 5, fait que la graisse 19, par centrifugation, vient s'accumuler sur la surface intérieure de la bague extérieure 5. La graisse 19 a tendance à s'échapper en fuyant entre la rainure 7 et l'organe d'étanchéité 13, malgré le contact entre l'armature 15 et le bord de la rainure 7 disposé du côté des éléments roulants et le contact entre le bourrelet en élastomère 17 et le bord de la rainure 7 du côté de la surface frontale 9.

Il en résulte qu'une partie 20 de la graisse parvient à s'échapper de l'intérieur du roulement et s'écoule le long de la surface frontale 9. Le roulement se vide peu à peu de la graisse qu'il contient à l'origine jusqu'à ce que le manque de lubrification provoque son échauffement et l'usure prématurée des pièces qui le constituent.

Sur les figures suivantes, les références des éléments semblables à ceux des figures 1 et 2 ont été augmentées du nombre 100.

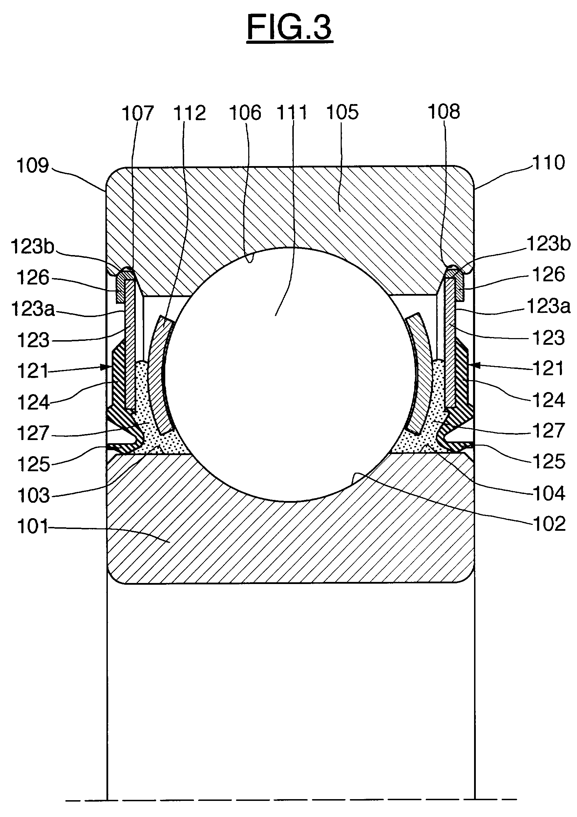

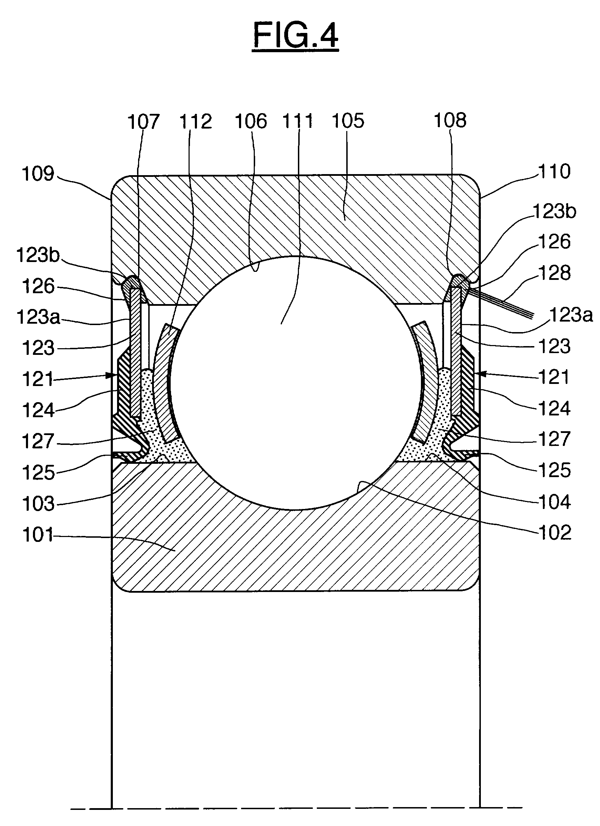

Comme on peut le voir sur les figures 3 et 4, l'organe d'étanchéité 121 comprend une armature métallique 123 radiale en forme de disque, pourvue d'une surface extérieure 123a et d'un bord extérieur 123b, et une partie en élastomère 124 recouvrant seulement une partie de la surface 123a, par exemple environ la moitié, et se terminant radialement vers l'intérieur par une lèvre d'étanchéité 125. L'armature 123 est partiellement revêtue d'un métal d'apport se présentant sous la forme d'un anneau 126 à section en L qui est fixé sur le bord extérieur 123b et sur une petite partie de la surface extérieure 123a, adjacente au bord 123b. L'anneau 126 comprend ainsi une courte portion axiale d'épaisseur sensiblement égale à celle du bord 123b et une portion radiale en contact avec la surface extérieure 123a. L'anneau 126 est réalisé en métal ou en alliage métallique, possédant un point de fusion assez bas et dont la fusion ne nécessite qu'un apport d'énergie faible de façon à ne nécessiter qu'une durée d'échauffement brève.

Une certaine quantité de graisse 127 est disposée dans le roulement préalablement au montage des joints d'étanchéité 121 et 122. La graisse 127 est disposée à proximité de la bague intérieure 101 afin de ne pas venir polluer les rainures 107 et 108. Puis on procède au montage des joints d'étanchéité 121 et 122, en les amenant par un mouvement axial, l'anneau 126 venant en contact avec la rainure 107 et la lèvre 125 venant en contact avec la surface cylindrique extérieure 103 de la bague intérieure 101.

Comme on peut le voir sur la figure 4, on procède alors à la mise en fusion de l'anneau 127 par un échauffement localisé obtenu par faisceau laser 128 ou par faisceau d'électrons dirigé sur ledit anneau 126. En un temps extrêmement court, le métal composant l'anneau 126 fond et se répand alors dans l'intérieur de la rainure 107 ou 108 en venant occuper le fond desdites rainures 107, 108 et leur bord interne, du côté des éléments roulants 111. En se refroidissant, le métal réalise à la fois la solidarisation de l'armature 123 avec la bague extérieure 105 du roulement, et l'étanchéité statique parfaite entre ladite armature 123 et ladite bague extérieure 105. Contrairement au caoutchouc, il n'existe aucun problème de vieillissement du matériau avec un métal d'apport tel qu'un métal à base d'étain qui conserve ses propriétés dans le temps. Le métal pourrait également être à base d'argent.

La fusion du métal d'apport se faisant à une température relativement basse, par exemple comprise entre 180°C et 200°C pour un métal à base d'étain, et demandant un temps très court, la chaleur dégagée ne risque pas d'altérer les propriétés de la bague extérieure 105 du roulement qui a subi un traitement thermique, par exemple de trempe.

En effet, la rainure 107, 108 supportant les organes d'étanchéité 121, 122 étant située à faible distance du chemin de roulement 106, un échauffement trop important et/ou trop long risquerait de provoquer des modifications locales de la structure de l'acier s'accompagnant d'une diminution de la dureté ainsi que de possibles déformations avec des conséquences nuisibles pour le fonctionnement ultérieur correct du roulement. Le fait de disposer la graisse 127 à proximité de la bague intérieure 101, évite de polluer les rainures 107, 108 de la bague extérieure 105 avant d'effectuer la fusion du métal d'apport.

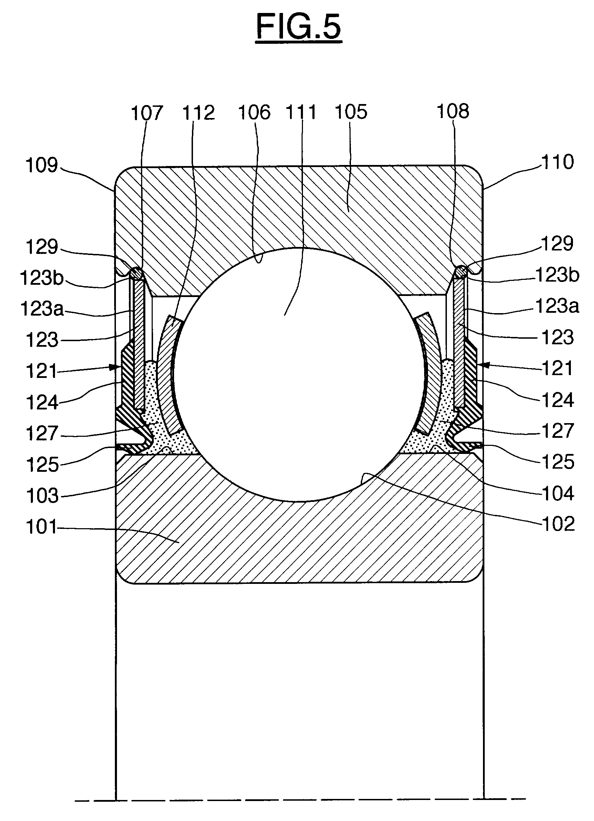

Sur la figure 5, est illustrée une variante de réalisation de l'invention qui est à rapprocher de la figure 3. A la place de l'anneau 126 à section en L de la figure 4, on dispose un simple anneau torique 128 dans le fond de chaque rainure 107, 108. Ces anneaux 128 étant réalisés dans le même métal ou alliage que l'anneau 126 de la figure 3.

Dans ce mode de réalisation, le métal d'apport peut se présenter sous la forme d'un fil coupé à la longueur voulue et enroulé sur lui-même pour former un anneau mis en place dans les rainures 107, 108 de la bague extérieure 105, avant ou après la mise en place des joints 121 et 122. On pourrait également prévoir le métal d'apport sous la forme d'un anneau continu. Après mise en place des anneaux 128 et des joints 121 et 122, on chauffe le cordon de métal d'apport afin de réaliser la soudure.

L'anneau de métal d'apport pourrait également être mis en place, après la mise en place du joint, contre la face de l'armature et à l'entrée de la rainure au lieu de le disposer comme précédemment au fond de la rainure. La diffusion dans le fond de la rainure se fait alors lors de la fusion du métal d'apport.

A titre de variante, on pourrait encore prévoir des rainures 107, 108 de formes différentes, par exemple formant un épaulement dans les surfaces radiales de la bague extérieure.

Bien entendu, l'invention s'applique à tout type de palier à roulement à une ou plusieurs rangées d'éléments roulants, à bague extérieure ou intérieure monobloc ou réalisée en plusieurs parties, à bague tournante extérieure ou intérieure, etc.

## Revendications

1. Dispositif de palier à roulement, du type comprenant une bague extérieure (105) pourvue d'un chemin de roulement intérieur (106) formé sur son alésage et d'au moins une rainure également formée sur son alésage et adjacente à une face radiale, une bague intérieure (101) pourvue d'un chemin de roulement extérieur (102) formé sur sa surface extérieure cylindrique, au moins une rangée d'éléments roulants (111) disposés entre les deux chemins de roulement, au moins un organe d'étanchéité (121) solidaire de l'une des bagues, l'organe d'étanchéité (121) comprenant une armature métallique (123) annulaire, et une partie de liaison (126) entre l'armature et la bague qui la supporte, la partie de liaison étant formée par un métal d'apport assurant après fusion et refroidissement la solidarisation et l'étanchéité par concordance de formes avec la dite armature et la dite bague, caractérisé par le fait que la partie de liaison est disposée dans ladite rainure.

2. Dispositif selon la revendication 1, caractérisé par le fait que l'armature est en contact avec la dite rainure.

3. Dispositif selon la revendication 1 ou 2, caractérisé par le fait que le métal d'apport est à base d'argent, d'étain ou d'un alliage d'argent et d'étain.

4. Dispositif selon l'une quelconque des revendications précédentes, caractérisé par le fait que la partie de liaison est formée dans une rainure annulaire (107) de la dite bague.

5. Dispositif suivant l'une quelconque des revendications précédentes, caractérisé en ce que l'organe d'étanchéité est un joint comportant au moins une lèvre souple annulaire (125) apte à venir en contact de frottement sur l'autre bague.

6. Dispositif suivant l'une quelconque des revendications 1 à 4, caractérisé en ce que l'organe d'étanchéité est un flasque métallique annulaire comportant un passage étroit avec l'autre bague.

7. Procédé de fixation d'un organe d'étanchéité sur une bague de palier à roulement, du type comprenant une bague extérieure pourvue d'un chemin de roulement intérieur formé sur son alésage, et d'au moins une rainure également formée sur son alésage et adjacente à une face radiale, une bague intérieure pourvue d'un chemin de roulement extérieur formé sur sa surface extérieure cylindrique, au moins une rangée d'éléments roulants disposés entre les deux chemins de roulement, et au moins un organe d'étanchéité solidaire de l'une des bagues, l'organe d'étanchéité comprenant une armature métallique rigide et une lèvre souple apte à venir en contact de frottement sur l'autre bague, le dit procédé comprenant la formation d'une partie de liaison par fusion et refroidissement d'un métal d'apport disposé entre l'armature et la bague qui la supporte, la partie de liaison étant disposée dans la dite rainure.

8. Procédé selon la revendication 7, dans lequel on dispose le métal d'apport sur un bord de l'armature, on met en place l'organe d'étanchéité sur la dite bague, on chauffe le métal d'apport jusqu'à obtenir sa fusion, le métal d'apport se répartissant entre l'armature et la dite bague puis se refroidissant.

9. Procédé selon la revendication 8, dans lequel on dispose le métal d'apport sous la forme d'un revêtement sur la périphérie de l'armature.

10. Procédé selon la revendication 7, dans lequel, le métal d'apport se présentant sous la forme d'un cordon, on coupe une longueur appropriée de cordon, on dispose le cordon et l'organe d'étanchéité sur la dite bague, on chauffe le métal d'apport jusqu'à obtenir sa fusion, le métal d'apport se répartissant entre l'armature et la dite bague puis se refroidissant.

11. Procédé suivant la revendication 7, dans lequel le métal d'apport se présentant sous la forme d'un anneau continu, on dispose l'anneau et l'organe d'étanchéité sur ladite bague, on chauffe le métal d'apport jusqu'à obtenir sa fusion, le métal d'apport se répartissant entre l'armature et ladite bague puis se refroidissant.

12. Procédé selon la revendication 7 à 11, dans lequel le moyen de chauffage du métal d'apport est un faisceau laser.

13. Procédé selon l'une quelconque des revendications 7 à 11, dans lequel le moyen de chauffage du métal d'apport est un faisceau d'électrons.
